# EUROPEAN PATENT APPLICATION

(11) **EP 4 844 659 A1**
(43) Date of publication of application: **25.11.2026**
(21) Application number: 26180415.7
(22) Date of filing: 21.05.2026
(51) Int. Cl.: G06Q 10/20, G06Q 50/04

(54) **METHOD FOR PROVIDING ASSISTANCE TO AN OPERATOR OF A MACHINE**

(30) Priority: 23.05.2025 IT 202500011800
(71) Applicant: SCM Group S.p.A., 47921 Rimini (RN) (IT)
(72) Inventor: BARBANTI, Alessio, 47921 Rimini (RN) (IT)
(74) Representative: Gallo, Gianluca

(57) **Abstract**

Described is a method for providing assistance to an operator of a machine configured to machine a workpiece, the method comprising the following steps of retrieving a technical text, containing one or more maintenance instructions relating to the machine, processing the technical text, so as to extract maintenance instructions and to generate an instructions vector containing the maintenance instructions extracted from the technical text, and storing the instructions vector, so as to make the instructions vector available to the operator. The present invention also relates to a client, a server and a system for providing assistance to an operator of a machine configured to machine a workpiece.

## Description

The present invention relates to a method, and a related software, for providing assistance to an operator of a machine configured to machine a workpiece.

As is well known, machines and, in particular, machine tools (that is "*machines for machining a workpiece*"), must be accompanied by a so-called *User Manual,* UM. The UM is a technical text, or document, which contains instructions for the correct and safe use of the machine. The UM must provide all the instructions to be able to install, use and carry out the maintenance of the machine itself. It is evident that for very complex machines, the UM can itself be, in turn, a substantial and complex technical text. This text can be provided by the manufacturer of the machine tool in electronic format, in order to reduce the printed paper and allow searches within the text itself. However, even in electronic format, it can be difficult to identify the information of interest within such a large, complex and extensive document. With particular reference to the maintenance instructions, for the latest generation of machine tools, this information can be reported within the UM in an organic manner within a dedicated chapter, often called *Operation and Maintenance Manual ,* O&M Manual. However, this practice is not always adopted, in particular in the UMs that refer to older machines, but also in the UMs that refer to latest generation of machines. Further, even when an O&M Manual is present, it can be very large, complex and extensive. For this reason, even when the technical text can be searched, it can be very complicated for an operator of a machine tool, in particular if it is very complex, to identify within the UM all the information regarding maintenance activities and the periods, timing or frequencies of execution associated with them.

Also, the search activities within an unstructured technical text, that is, one that is very large, complex, and extensive, can be very lengthy, inefficient, and produce not very reliable results.

The aim of the present invention is to provide a method, and a relative software, for providing assistance to an operator of a machine configured to machine a workpiece, which overcome the above-mentioned drawbacks of the prior art.

Another aim of the present invention is to provide a method, and a relative software, for providing assistance to an operator of a machine configured to machine a workpiece, which enable the identification of information of interest, particularly relating to the maintenance of a machine tool, in a simple manner.

In particular, an aim of the present invention is to provide a method, and a relative software, for providing assistance to an operator of a machine configured to machine a workpiece, enabling the structuring of information of interest, in particular relating to the maintenance of a machine tool, in particular in the presence of unstructured texts.

Further, an aim of the present invention is to provide a method, and relative software, for providing assistance to an operator of a machine configured to machine a workpiece, enabling the identification of information of interest, in particular relating to the maintenance of a machine tool, in a fast and reliable manner.

Said aims are fully achieved by the method, and by the relative software, for providing assistance to an operator of a machine configured to machine a workpiece, as characterised in the appended claims.

In the following description, reference will be made mainly to the assistance to an operator of a machine configured to machine a workpiece, in order to identify and structure information related to the maintenance of a machine tool. However, it should be noted that the method, and the related software, according to the present invention could also be applied to other categories of information of interest to the operator such as, for example, the installation or special operations of the machine, while always remaining within the scope of protection defined by the appended claims.

The present invention provides a method of providing assistance to an operator of a machine configured to machine a workpiece.

Advantageously, the method comprises the step of retrieving a technical text containing one or more maintenance instructions relating to the machine. Further, the method comprises the step of processing the technical text, for example by means of a natural language processing (NLP) engine trained to extract maintenance instructions from a technical text, to extract maintenance instructions and to generate an instructions vector containing the maintenance instructions extracted from the technical text. Also, the method comprises the step of storing the instructions vector, so as to make the instructions vector available to the operator.

More advantageously, the method may further comprise the following steps of processing the technical text, for example by means of an **NLP** engine trained to extract frequencies for maintenance instructions, to extract frequencies from the technical text and to generate a frequencies vector containing the frequencies extracted from the technical text, each frequency extracted being relative to one or more maintenance instructions of the instructions vector, and to store the frequencies vector, so as to make the frequencies vector available to the operator. The **NLP** engine trained to extract frequencies for maintenance instructions may coincide with the natural language processing (NLP) engine trained to extract maintenance instructions from a technical text, or they may be two separate engines.

In particular, the method may further comprise the following steps of generating a dates vector from the frequencies vector, the dates of the dates vector being representative of a deadline for executing one or more maintenance instructions of the instructions vector, and storing the dates vector, so as to make the dates vector available to the operator.

More particularly, one or more dates of the dates vector may be generated and/or modified as a function of information relating to the state of the machine, for example, retrieved by the machine itself.

Also, the method may comprise the step of sending to the operator a warning containing information relating to a date of the dates vector and to the maintenance instructions of the instructions vector relative to the date itself.

Advantageously, the method may comprise the following steps of generating, for example by means of an NLP engine trained to generate categories for maintenance instructions, one or more categories representative of the maintenance instructions of the instructions vector, so as to generate a categories vector containing the generated categories, each category generated being representative of one or more maintenance instructions of the instructions vector, and storing the categories vector, so as to make the categories vector available to the operator. The NLP engine trained to generate categories for maintenance instructions may coincide with the natural language processing (NLP) engine trained to extract maintenance instructions from a technical text, or they may be two separate engines.

More advantageously, the method may further comprise the following steps of providing the categories of the categories vector to the operator, for example by means of an operator interface, receiving from the operator, for example by means of an operator interface, a selection of a category of the categories vector, and providing the operator, for example by means of the operator interface, with the maintenance instructions of the instructions vector relating to the selected category.

Also, the method may comprise the following steps of processing the technical text so as to extract accompanying information and to generate an accompanying information vector containing the accompanying information extracted from the technical text, each piece of accompanying information extracted being relative to one or more maintenance instructions of the instructions vector, storing the accompanying information vector so as to make the information vector available to the operator, and providing the operator, for example by means of the operator interface, with the accompanying information relating to the maintenance instructions of the instructions vector relative to the selected category.

Further, the present invention provides a computer program, including instructions configured for carrying out the steps of the method described above.

Also, the present invention provides a server for providing assistance to an operator of a machine configured to machine a workpiece.

The server 3 comprises a computer configured, or programmed, to retrieve a technical text, containing one or more maintenance instructions relating to the machine, and to process the technical text, for example by means of a natural language processing engine, NLP, trained to extract maintenance instructions from a technical text, so as to extract maintenance instructions and to generate an instructions vector containing the maintenance instructions extracted from the technical text. Also, the server comprises a server memory configured to store the instructions vector, so as to make the instructions vector available to the operator. Additionally, the server comprises a server communication system configured to transmit one or more maintenance instructions of the instructions vector to a client.

Advantageously, the computer can be configured to process the technical text, by means of an NLP engine trained to extract frequencies for maintenance instructions, so as to generate a frequencies vector containing the frequencies extracted from the technical text. Each extracted frequency may relate to one or more maintenance instructions in the instructions vector. The server memory may be configured to store the frequencies vector. The server communication system can be configured to transmit one or more frequencies of the frequencies vector to the client.

In particular, the computer may be configured to generate a dates vector from the frequencies vector. The dates of the dates vector may represent a deadline for performing one or more maintenance instructions of the instructions vector. The server memory can be configured for storing the dates vector. The server communication system can be configured to transmit one or more dates of the dates vector to the client.

More specifically, the server communication system can be configured to receive information relating to the state of the machine from the machine itself. The computer may be configured to generate and/or modify one or more dates of the dates vector as a function of the information received relating to the state of the machine.

Also, the computer may be configured to generate, for example by means of an NLP engine trained to generate categories for maintenance instructions, one or more categories representative of the maintenance instructions of the instructions vector, so as to generate a categories vector containing the generated categories. Each generated category may be representative of one or more maintenance instructions of the instructions vector. The server memory can be configured to store the categories vector. The server communication system may be configured for transmitting the categories vector to the client.

Advantageously, the server communication system may be configured to receive, from the client, a category selected by the operator from among the categories of the categories vector transmitted from the server to the client. Also, the communication system may be configured to transmit, to the client, the maintenance instructions of the instructions vector relating to the selected category.

Advantageously, the server computer can be configured to process the technical text, so as to extract accompanying information and to generate an accompanying information vector containing the accompanying information extracted from the technical text, each accompanying information extracted being related to one or more maintenance instructions of the instructions vector. Further, the server memory may be configured to store the accompanying information vector, so as to provide the accompanying information vector to the operator. In particular, the server communication system may be configured to transmit the accompanying information related to the maintenance instructions of the instructions vector relative to the selected category.

Also, the present invention provides a client for providing assistance to an operator of a machine configured to machine a workpiece.

The client comprises an operator interface. The operator interface is configured to receive as input, from an operator, a technical text containing one or more maintenance instructions relating to the machine and/or information relating to the machine. The client comprises a client communication system. The client communication system is configured to transmit, to a server, the technical text and/or the information relating to the machine and to receive, from the server, an instructions vector containing maintenance instructions relating to the machine. Also, the operator interface is configured to provide the operator with the instructions vector.

Advantageously, the communication system may be configured to receive from the server one or more alerts, the warnings containing information relating to one or more dates, each date representing a deadline relating to one or more maintenance instructions contained in the instructions vector received from the server.

More advantageously, the client communication system may be configured to receive, from the server, a categories vector, each category of the categories vector being representative of one or more maintenance instructions of the instructions vector. In this case, the operator interface is configured to provide, to the operator, the categories of the categories vector and to receive, from the operator, a selection of a category of the categories vector. Also, the client communication system may be configured to transmit, to the server, the selected category and to receive, from the server, the instructions vector containing the maintenance instructions relating to the selected category.

Also, the present invention provides a system for providing assistance to an operator of a machine configured to machine a workpiece. The system comprises a client and a server as described above.

These and other features of the invention will become more apparent from the following detailed description of a preferred, non-limiting example embodiment of it, with reference to the accompanying drawings, in which:
- Figure 1 illustrates a system for providing assistance to an operator of a machine configured to machine a workpiece in a first embodiment; and
- Figure 2 illustrates the system for providing assistance to an operator of a machine configured to machine a workpiece in a second embodiment.

The directional terminology, such as "right", "left", "front", "rear", "base", "top", "upper", "lower", "side", etc., is used below with reference to the accompanying drawings. Since components and/or elements and/or embodiments of this invention may be positioned and/or made to operate in various different orientations, the directional terminology is used purely by way of a non-limiting example.

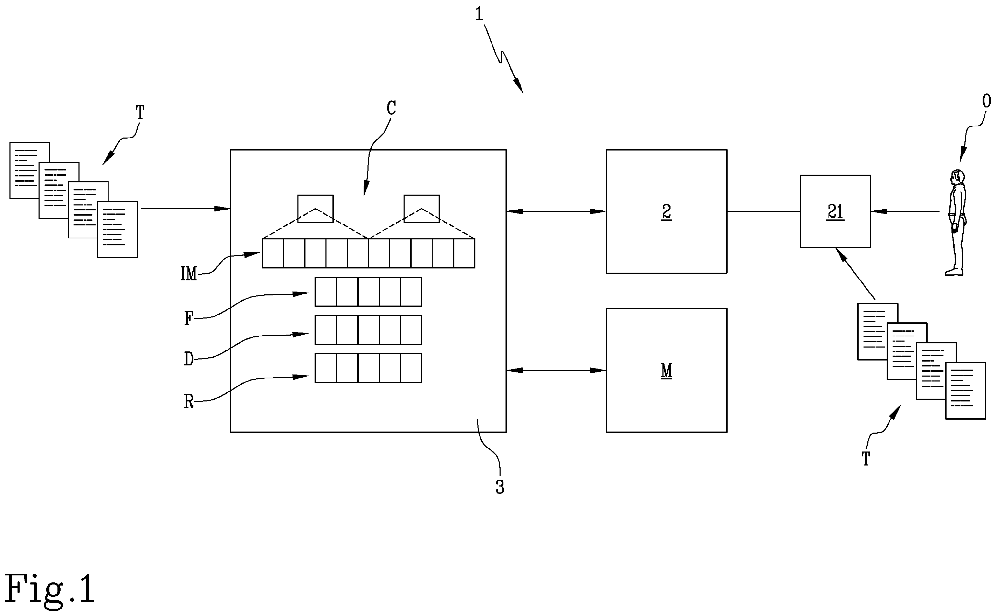

Figure 1 shows an example of a system 1, for providing assistance to an operator O of a machine M configured to machine a workpiece, in a first embodiment.

The system 1 may comprise a client 2. The client 2 can be, for example, a software that requires and uses services or resources provided by another component called a server, a Personal Computer, a PC, or a mobile device such as, for example, a smartphone or a tablet, accessible to an operator O.

The client 2 may comprise an operator interface 21. The operator interface 21 can be configured to allow the operator O to enter input data such as, for example, data relating to the machine M, data relating to the operator O, one or more selections made by the operator O, and one or more technical texts T, in particular technical texts T containing one or more maintenance instructions related to the machine M.

Reference will always be made below to one technical text T. However, it should be noted that the method, and the related system, according to the present invention, could also be applied to the processing of multiple technical texts T, while always remaining within the scope of protection defined by the appended claims.

The operator interface 21 may be, for example, a keyboard, a touchscreen monitor, or a reader of a digital physical medium such as, for example, a CD, a DVD, a USB flash memory.

The operator interface 21 may be configured to provide data and information to the operator O. The operator interface 21 may be, for example, a display monitor and, in particular, display information and data to the operator O, or a touchscreen monitor.

The client 2 may comprise a client communication system for transmitting to and receiving from a server 3, for example, information, data, commands and/or instructions. In particular, the client computer 2 and the server computer 3 may be connected to each other by means of a private communication network or a public communication network such as, for example, the Internet, according to known communication standards.

The system 1 may comprise the server 3. The server 3 may be, for example, a component (generally a computer or a program) that provides services, resources or data to other devices or programs called clients.

The server 3 may comprise a server communication system for transmitting to and receiving from the client 2, for example, information, data, commands and/or instructions. Also, the server 3 may be connected, for example, by means of the server communication system, to one or more remote servers by means of a private communication network or a public communication network such as, for example, the Internet, according to known communication standards.

The server computer 3 can "host" an algorithm, in particular, an Artificial Intelligence (AI) algorithm. The term "host" means that the Al algorithm runs on the server 3. In particular, the server 3 may comprise a computer configured to execute the Al algorithm. The server 3 may offer to a client, such as, for example, the client 2 or directly to the operator O (if the latter has direct access to the server 3), the processing services offered by the Al algorithm itself. In particular, the Al algorithm may be, for example, a natural language processing engine, NLP (hereinafter "*NLP engine*"). In particular, the Al algorithm may be a Large Language Model, LLM, or Multimodal Large Language Model, MLLM. Also, the algorithm may feature a generative pre-trained transformer architecture, GPT.

With reference to the example shown in Figure 1, the server 3 can retrieve the technical text T, containing one or more maintenance instructions relating to the machine M. The technical text T can be retrieved, for example, from a remote server connected and communicating with the server 3. For example, the remote server may be a Document Management System (DMS) server from the manufacturer of the machine M. Further, the technical text T may be retrieved, for example, from the client 2. In this case, the client 2 may in turn have retrieved the technical text T from the operator O, who may have loaded it onto the client 2 by means of the operator interface 21.

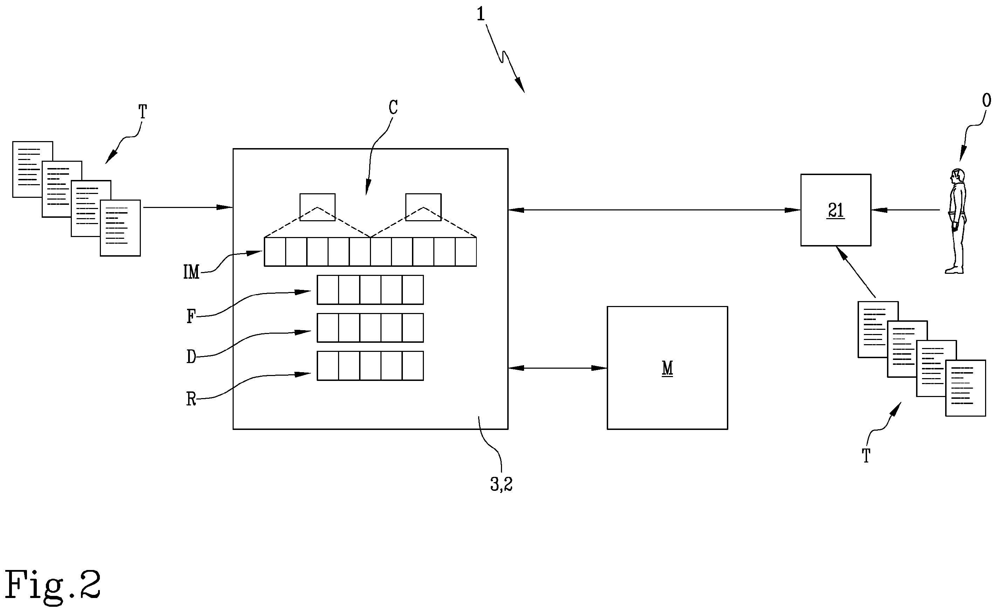

With particular reference to the example of Figure 2, in which an example of the system 1 is shown in a second embodiment, the client 2 and the server 3 can be formed by, or contained within, a single component 2, 3 comprising, for example, the operator interface 21. In this case, the server 3 may retrieve the technical text T directly from the operator O, who may have uploaded it to the server 3 by means of the operator interface 21.

Once the technical text T has been retrieved by the server 3, the server 3 can process, for example by means of the NLP engine, the technical text T, so as to extract one or more maintenance instructions and generate an instructions vector IM containing the maintenance instructions extracted from the technical text T. The maintenance instructions contained in the instructions vector IM represent maintenance operations to be executed on the machine M in order to ensure, for example, its correct operation over time.

The NLP engine for the extraction of maintenance instructions can be trained to extract maintenance instructions from a technical text. In order optimise the effectiveness of the processing step of the technical text T, in particular, in the step of extracting maintenance instructions, the NLP engine can be trained through an approach based on "reinforcement learning". This methodology can advantageously improve the accuracy in the extraction of the maintenance instructions. The reinforced learning mechanism makes significant use of human feedback (Reinforcement Learning from Human Feedback, RLHF): an experienced supervisor intervenes to validate or correct the outputs of the NLP engine, thus contributing to a continuous process of refinement and adaptation. Alternatively or in addition, an automated "reinforcement learning" process can be implemented, which compares the outputs of the NLP engine generated with a set of predefined responses or reference parameters with an expected output set, allowing the NLP engine to self-assess and independently adjust its performance. The aim is to make the NLP engine increasingly effective and precise in recognising maintenance instructions inside, for example, the user and maintenance manuals of the machine tools and, in particular, the machine M, thereby improving the quality and relevance of the extracted maintenance instructions. The NLP engine can be trained using different data sources such as, for example:
- technical specifications of products such as, for example, detailed information on the design, materials, functionality and technologies used in the products;
- R&D documentation such as, for example. studies, research reports and development notes which detail the product creation process;
- marketing and branding materials such as, for example, promotional content, branding guidelines and marketing strategies for products belonging to a specific brand;
- user manuals and guides such as, for example, documentation providing instructions for use, safety guidelines and maintenance advice;
- market research, feedback and consumer reviews such as, for example, data collected on consumer experiences, reviews and feedback; and/or
- competitive analysis reports such as, for example, information on the direct competitors, including the comparative analysis of similar products on the market.

The training data can be provided to the NLP engine, in particular, when it has an architecture of the GPT type, for example, in the form of natural language, in the form of images and/or videos and/or in the form of audio, in any electronic format. Once trained and optimised, the NLP engine can be integrated, for example, into the server 3. The server 3 may, therefore, host a plurality of NLP engines trained by means of different data, for example, for different machines. Each engine of the plurality of NLP engines can therefore be optimised for different machines, for different machine parts, for different technologies, and with different levels of specialisation. The server 3 may choose which NLP engine of the plurality of NLP engines to use for extracting the maintenance instructions relating to the machine M, so as to use, for example, the most suitable NLP engine for a specific machine.

The server 3 may comprise a server memory. The server memory can be configured to store data and information. In particular, the instructions vector IM may be stored inside the server memory. For example, by means of the server memory the instructions vector IM can be made available to the operator O, for example, by sending it to the client 2 and by means of the operator interface 21.

Also, the server 3 may process, for example by means of an NLP engine, the technical text T, so as to extract frequencies for maintenance instructions and generate a frequencies vector F containing the frequencies extracted from the technical text T. Each frequency extracted may be relative to one or more maintenance instructions of the instructions vector IM. The frequencies extracted represent the frequency of repetition of one or more maintenance instructions, for example, how often, in terms days, months, and/or years, a maintenance instruction must be executed on the machine M by the operator O. It is not said that each maintenance instruction of the instructions vector IM has a frequency associated, in fact, a maintenance instruction could be executed as *required* and not with a predetermined deadline.

The frequencies vector F can be stored, for example, in the server memory, so as to be available to the operator O, for example, by sending it to the client 2 and by means of the operator interface 21.

The NLP engine for the extraction of the frequencies can be trained to extract frequencies for maintenance instructions. Further, the NLP engine for the extraction of frequencies may be the same NLP engine used for the extraction of maintenance instructions, or it may be a dedicated NLP engine. With regard to the training methods, what has already been described for the NLP engine for the extraction of the maintenance instructions applies, *mutasi mutandis.*

Further, the server 3 may generate a dates vector D from the frequencies vector F, for example, by processing, by means of the computer, the frequencies vector F. In particular, each date of the dates vector D may be representative of a deadline for executing, by the operator O, one or more maintenance instructions of the instructions vector IM relative to the machine M. The server 3 may generate the dates vector D, for example, by processing the frequencies vector F by means of an NLP engine, in particular, an NLP engine trained to generate dates from frequencies relating to one or more maintenance instructions.

The NLP engine for generating the dates of the dates vector D may be the same NLP engine used for extracting the maintenance instructions, or it may be a dedicated NLP engine. With regard to the training methods, what has already been described for the NLP engine for the extraction of the maintenance instructions applies, *mutasi mutandis.*

The dates vector D can be stored, for example, in the server memory, so as to be available to the operator O, for example, by sending it to the client 2 and by means of the operator interface 21.

With particular reference to Figures 1 and 2, the server 3 can be connected to the machine M, for example, by means of the server communication system. In this way, the server 3 can be configured to receive from the machine M status information relating to the machine M itself. For example, the machine M can communicate to the server 3 data on the usage of machine M and/or its parts, accessories, or components, in order to assess, for example, the actual usage status of one or more components of machine M. The server 3 can process such information on the state of the machine and, based on this processing, generate and/or modify one or more dates of the dates vector D. For example, knowing the hours of use of a component of the machine M, the server 3 can generate the relative date of the dates vector D for the execution of a maintenance instruction of the instructions vector IM related to that component, or by evaluating the hours of use, the server 3 can bring forward a date of the dates vector D related to the maintenance of that component, thereby ensuring efficient and timely maintenance of machine M and guaranteeing its correct operation over time. For this reason, the system 1 could generate the dates vector D by also processing other information that is not necessarily the frequencies of the frequencies vector F.

The server 3 can provide the operator O with any information contained, for example, in the server memory, so as to make this information available to the operator O.

With particular reference to the example shown in Figure 1, the server 3 can send such information to the client 2. The client 2 may make this information available to the operator O, for example, by means of the operator interface 21.

With particular reference to the example shown in Figure 2, the server 3 may make this information available to the operator O, for example, directly by means of the operator interface 21.

In particular, such information may be a warning. The warning may contain, for example, information relating to:
- one or more dates of the dates vector D; and/or
- one or more maintenance instructions of the instructions vector IM, in particular, maintenance instructions of the instructions vector IM relating to the dates of the dates vector D present in the warning itself.

For example, these warnings inform the operator O that a certain maintenance instruction relating to the machine M must be carried out by a deadline.

Also, the server 3 may generate one or more categories. The categories can be representative of the maintenance instructions of the instructions vector IM, that is, they can be *clusters* or groupings. For example, a category may group together the maintenance instructions of the instructions vector IM all pertaining to a part, or component, of the machine M. In another example, the categories may group together the maintenance instructions of the instructions vector IM as a function of the frequency with which they must be executed on the machine M. Also, the categories may simply represent a title of a chapter of the technical text T that contains a set of maintenance instructions. The server 3 may generate a categories vector C containing the generated categories, each generated category being representative of one or more maintenance instructions of the instructions vector IM. The server 3 may generate the categories of the categories vector C, for example, by means of an NLP engine, in particular, an NLP engine trained to generate categories relating to one or more maintenance instructions. The NLP engine for generating the categories of the categories vector C may be the same NLP engine used for extracting the maintenance instructions, or it may be a dedicated NLP engine. With regard to the training methods, what has already been described for the NLP engine for the extraction of the maintenance instructions applies, *mutasi mutandis.*

The categories vector C can be stored, for example, in the server memory, so as to be available to the operator O, for example, by sending it to the client 2 and by means of the operator interface 21. In particular, the categories vector C may be shown by means of the operator interface 21 to the operator O, for example, in the form of a list.

The operator O, by means of, for example, the operator interface 21, may select a category from the categories vector. The selection of the operator O can then be transmitted from the interface 21 to the server 3 and, in particular, from the interface 21 of the client 2 to the server 3.

Based on the selection of the operator O, the server 3 can provide the operator O with the maintenance instructions of the instructions vector IM relating to the selected category, in particular, by means of the interface 21, more in particular, by means of the interface 21 of the client 2. In this way it is possible to provide the operator O only with the maintenance instructions of the instructions vector IM of specific interest, limiting the transmission of data and improving the efficiency of the communication, for example, between the server 3 and the client 2. Further, in this way the operator O will not have to search through all the maintenance instructions of the instructions vector IM for those of specific interest, but will be facilitated in the search by the categories of the categories vector C, improving the experience of use of the system 1 by the operator.

Also, the server 3 may process the technical text T to extract accompanying information and to generate an accompanying information vector R. Each accompanying information extracted may be related to one or more maintenance instructions of the instructions vector IM and, in particular, may provide information, for example, on the consumable materials, spare parts and/or personal protective devices useful or necessary for the execution of the maintenance instruction to which they refer.

Not every maintenance instruction of the instructions vector IM has accompanying information associated, in fact, a maintenance instruction might be executed without requiring consumable materials, spare parts, or safety equipment.

The accompanying information vector R may be stored, for example, in the server memory, so as to be available to the operator O, for example, by sending it to the client 2 and by means of the operator interface 21.

The server 3 may process the technical text T in order to extract accompanying information, for example by means of an NLP engine trained to extract accompanying information for maintenance instructions. Further, the NLP engine for the extraction of the accompanying information may be the same NLP engine used for the extraction of the maintenance instructions, or it may be a dedicated NLP engine. With regard to the training methods, what has already been described for the NLP engine for the extraction of the maintenance instructions applies, *mutasi mutandis.*

Based on the selection of the operator O, the server 3 can provide the operator O with the accompanying information relative to the maintenance instructions of the instructions vector IM relating to the selected category, in particular, by means of the interface 21, more in particular, by means of the interface 21 of the client 2. In this way, it is possible to provide the operator O only with the accompanying information related to the maintenance instructions of the instructions vector IM that are of specific interest.

The present invention is described by way of example only, without limiting the scope of application, according to its preferred embodiments, but it shall be understood that the invention may be modified and/or adapted by experts in the field without thereby departing from the scope of the inventive concept, as defined in the claims herein.

## Claims

1. A method for providing assistance to an operator (O) of a machine (M) configured to machine a workpiece, the method comprising the following steps:
- retrieving a technical text (T) containing one or more maintenance instructions relating to the machine (M);
- processing the technical text (T) to extract maintenance instructions and to generate an instructions vector (IM) containing the maintenance instructions extracted from the technical text (T); and
- saving the instructions vector (IM), so as to keep the instructions vector (IM) at the disposal of the operator (O).

2. The method according to claim 1, further comprising the following steps:
- processing the technical text (T), to extract frequencies and to generate a frequencies vector (F) containing the frequencies extracted from the technical text (T), each frequency extracted relating to one or more maintenance instructions of the instructions vector (IM); and
- saving the frequencies vector (F), so as to keep the frequencies vector (F) at the disposal of the operator (O).

3. The method according to claim 2, further comprising the following steps:
- generating a dates vector (D) from the frequencies vector (F), the dates of the dates vector (D) representing a deadline for performing one or more maintenance instructions of the instructions vector (IM); and
- saving the dates vector (D), so as to keep the dates vector (D) at the disposal of the operator (O).

4. The method according to claim 3, comprising the step of retrieving information relating to the state of the machine (M), wherein one or more dates of the dates vector (D) are generated and/or modified as a function of the retrieved information relating to the state of the machine (M).

5. The method according to claim 4, further comprising the following step:
- sending to the operator (O) a notification containing information relating to a date of the dates vector (D) and to the maintenance instructions of the instructions vector (IM) relating to that date.

6. The method according to any one of the preceding claims comprising the following steps:
- generating one or more categories, representing the maintenance instructions of the instructions vector, in order to generate a categories vector (C) containing the categories generated, each category generated representing one or more maintenance instructions of the instructions vector (IM); and
- saving the categories vector (C), so as to keep the categories vector (C) at the disposal of the operator (O).

7. The method according to claim 6, further comprising the following steps:
- providing to the operator (O) the categories of the categories vector (C);
- receiving from the operator (O) a category selected from the categories vector (C); and
- providing to the operator (O) the maintenance instructions of the instructions vector (IM) relating to the category selected.

8. The method according to claim 7, comprising the following steps:
- processing the technical text (T) in order to extract accompanying information and to generate an accompanying information vector (R) containing the accompanying information extracted from the technical text (T), each accompanying information item extracted relating to one or more maintenance instructions of the instructions vector (IM);
- saving the accompanying information vector (R) so as to keep the accompanying information vector (R) at the disposal of the operator (O); and
- providing to the operator (O) the accompanying information relating to the maintenance instructions of the instructions vector (IM) relating to the category selected.

9. A computer program including instructions configured for executing the steps of the method according to any one of claims 1 to 8.

10. A server (3) for providing assistance to an operator (O) of a machine (M) configured to machine a workpiece, the server (3) comprising:
- a computer configured for
- retrieving a technical text (T) containing one or more maintenance instructions relating to the machine (M); and
- processing the technical text (T) in order to extract maintenance instructions and to generate an instructions vector (IM) containing the maintenance instructions extracted from the technical text (T);
- a server memory, configured to store the instructions vector (IM), so as to keep the instructions vector (IM) at the disposal of the operator (O); and
- a server communication system, configured to transmit to a client (2) one or more maintenance instructions of the instructions vector (IM).

11. The server (3) according to claim 10, wherein the computer is configured to process the technical text (T), to extract frequencies and to generate a frequencies vector (F) containing the frequencies extracted from the technical text (T), each frequency extracted relating to one or more maintenance instructions of the instructions vector (IM), wherein the server memory is configured to store the frequencies vector (F), and wherein the server communication system is configured to transmit to the client (2) one or more frequencies of the frequencies vector (F).

12. The server (3) according to claim 11, wherein the computer is configured to generate a dates vector (D) from the frequencies vector (F), each date of the dates vector (D) representing a deadline for performing one or more maintenance instructions of the instructions vector (IM), wherein the server memory is configured to store the dates vector (D), and wherein the server communication system is configured to transmit to the client (2) one or more dates of the dates vector (D).

13. The server (3) according to claim 12, wherein the server communication system is configured to receive from the machine (M) information relating to the state of the machine (M), and wherein the computer is configured to generate and/or modify one or more dates of the dates vector (D) as a function of the information received relating to the state of the machine (M).

14. A client (2) for providing assistance to an operator (O) of a machine (M) configured to machine a workpiece, the client (2) comprising:
- an operator interface (21), configured to receive as input from the operator (O) a technical text (T) containing one or more maintenance instructions relating to the machine (M), and/or data relating to the machine (M); and
- a client communication system, configured to transmit to the server (3) the technical text (T) and/or the data relating to the machine (M) and to receive from the server (3) an instructions vector (IM) containing maintenance instructions relating to the machine (M);
wherein the operator interface (21) is configured to provide the instructions vector (IM) to the operator (O).

15. The client (2) according to claim 17, wherein the communication system is configured to receive one or more notifications from the server (3), the notifications containing information relating to one or more dates, each date representing a deadline relating to one or more maintenance instructions of the instructions vector (IM) received from the server (3).
